# EUROPEAN PATENT APPLICATION

(11) **EP 2 042 358 A2**
(43) Date of publication of application: **01.04.2009**
(21) Application number: 08015732.4
(22) Date of filing: 05.09.2008
(51) Int. Cl.: B60H 1/32, B60H 1/00

(54) **Cold plate refrigeration system optimized for energy efficiency**

(30) Priority: 28.09.2007 US 863646
(71) Applicant: International Truck Intellectual Property Company, LLC., Warrenville, IL 60555 (US)
(72) Inventor: Larson, Gerald L., Fort Wayne IN 46804 (US); Anderson, James J., Bloomer WI 54724 (US); Peterson, Larry, Rice Lake WI 54868 (US)
(74) Representative: Kuhnen & Wacker

(57) **Abstract**

A Cold Plate Refrigeration System Optimized for Energy Efficiency is provided utilizing two refrigerant compressors and a single set of cold plates; or two refrigerant compressors, a conventional evaporator to air heat exchanger, and a single set of cold plates; or a single refrigerant compressor, a conventional evaporator to air heat exchanger, and a single set of cold plates. It is emphasized that this abstract is provided to comply with the rules requiring an abstract that will allow a searcher or other reader to quickly ascertain the subject matter of the technical disclosure.

## Description

### Reference to a Related Application and Priority Claim

This application is a continuation-in-part, and claims priority, of pending Application No. 11/372,506 filed 10 March 2006.

### Background

Commercial motor vehicles such as medium or heavy duty trucks at times are used to carry perishable items such as foods, and are often provided with insulated truck bodies for this purpose. Various methods are used to refrigerate the interior of the insulated truck body, such as using the vehicle prime mover engine to drive a refrigerant compressor, or by use of a separately powered refrigeration unit. Often, the separately powered refrigeration unit type systems incorporate a small auxiliary diesel engine for autonomous operation, and an electric motor for use when at a loading and unloading location where municipal electric power is available. Actual cooling of the interior of the insulated truck body is accomplished by means of a conventional evaporator to air heat exchanger. The principal disadvantage of this type of system is the inefficiency associated with the weight and fuel consumption of the auxiliary diesel engine, as well as the expense associated with the purchase and installation of the autonomous system and supporting subsystems, including emissions controls. Furthermore, separately powered refrigeration unit systems have undesirable failure mechanisms and maintenance requirements differing from the truck maintenance cycle.

Vehicles having refrigerant "split systems" where the compressor is engine mounted are cost efficient when compared with systems using small diesel engines. However, since the compressors are engine mounted, capacity limitations exist due to size limitations, system installations are complex, and similar failure mechanisms exist. These systems also require continuous engine operation, which has significant disadvantages relative to fuel costs and anticipated idle reduction requirements.

One of the more efficient methods of refrigerating an insulated truck body and thereby keeping perishable items fresh is by use of "Cold Plate" technology. "Cold Plate" refrigeration relies upon aluminum or other metal containers called cold plates that are filled with a solution having a pre-determined freezing point, often corresponding to the eutectic point of the given solution. Common solutions utilized include salt brine or anti-freeze and water. Prior to vehicle operation, typically overnight, a small (typically 1.5 horsepower or 1500 watts) on-board refrigerant compressor is operated in conjunction with a condensor, expansion valve, and evaporator heat exchanger to bring the cold plates to a frozen condition. The vehicle then typically departs in the morning for its delivery rounds. The refrigerated cargo is maintained at a proper temperature by the latent heat of fusion that is absorbed until the cold plate solution thaws.

Cold plate refrigeration is very reliable, energy and cost efficient due to the use of 115 Volts Alternating Current (VAC) single phase, 230 VAC three phase, or similar utility electricity. It is also capable of maintaining relatively precise temperature when compared to separately powered refrigeration unit type systems or split systems. The provision of relatively precise temperatures is of particular advantage in the delivery of milk or other temperature sensitive foods being subject to strict FDA guidelines. The major limitation of the Cold Plate refrigeration system is the usable operational time. The available time for deliveries before the cold plate solution thaws typically limits vehicle usage to a single shift operation, though the usable time may be extended by opportunistic plug-in and operation of the on-board refrigeration compressor at points of delivery.

### Summary

The Cold Plate Refrigeration System Optimized for Energy Efficiency described herein provides several optimized solutions for vehicle insulated truck body cold plate refrigeration systems. These solutions include providing an on-board system comprised of two refrigerant compressors and a single set of cold plates; or two refrigerant compressors, a conventional evaporator to air heat exchanger, and a single set of cold plates; or a single refrigerant compressor, a conventional evaporator to air heat exchanger, and a single set of cold plates.

One refrigerant compressor may function and be sized to achieve rapid cooling of the liquid medium in the cold plates using utility Alternating Current (AC) electrical power when the vehicle is plugged-in, or when a generator driven by the vehicle engine and having an inverter has sufficient available power to operate it. A second refrigerant compressor may be sized to approximately maintain the eutectic medium at or below its frozen state under various environmental operating conditions, or to simply operate a conventional evaporator to air heat exchanger for supplemental cooling, when the vehicle engine is providing the power to operate the system. Operation of the second compressor may be continuous while the vehicle is in operation, or it may be equipped to sense the state of the cold plates' eutectic solution, such that it only operates once the solution has thawed. The second compressor may even be based on a hysteresis range of interior temperature of the insulated truck body, rather than upon the condition of the cold plates. The two refrigerant compressors may also be of approximately the same power rating, and may be used together or separately in certain situations, as will be disclosed herein.

The refrigerant compressor or compressors are electrically powered, and may receive electrical power from a vehicle primary engine driven generator, which electrical power may be converted by an inverter, or the electrically powered compressor or compressors may receive power from a shore power connection, depending on the circumstances. Selection of a power source and management of the operation of the refrigerant compressors may be accomplished by a switching unit, which switching unit may be manual or automatic. The vehicle primary engine driven generator may produce Direct Current (DC) power in the range of eight to sixteen volts DC, as is common with motor vehicles, or it may produce DC power in a higher range, typically 40 to 350 volts DC. This electrical power may be then converted by an inverter to 115 VAC operating at sixty hertz. In certain embodiments, the electrical power may be converted by the inverter to 230 VAC split-phase or to 208 volts three-phase, or may be converted by the inverter to 115 VAC and then be further converted by a transformer to 230 VAC split-phase or to 208 volts three-phase. The use of higher DC voltage as produced by the vehicle primary engine driven generator in combination with an inverter results in overall greater efficiency, and allows the use of a smaller, less expensive inverter.

The switching unit may sense when the vehicle primary engine is idling, or is in a condition of producing less power due to a de-rate imposed by environmental conditions, and may respond by selecting operation of only one compressor or directing the refrigerating capacity to only one of the cold plates or interior evaporator. The switching unit may further be capable of sensing and responding to other factors, such as frosting of the interior evaporator or cold plates, or failure of a compressor or circuitry. It may also control one or more valves directing the output of the refrigerant compressor or compressors.

As described above, the Cold Plate Refrigeration System Optimized for Energy Efficiency and a vehicle made with this system provide a number of advantages, some of which have been described above and others of which are inherent in the invention. Also, modifications may be proposed to the Cold Plate Refrigeration System Optimized for Energy Efficiency or a vehicle made with the system without departing from the teachings herein.

### Brief Description of the Drawings

Figure 1 - A vehicle having an insulated truck body.

Figure 2 - A vehicle having an insulated truck body, an engine, a generator, an inverter, shore power, a switching unit, refrigerant compressors, a condenser, cold plates, and an interior evaporator.

Figure 3 - A first embodiment of the invention.

Figure 4 - A second embodiment of the invention.

Figure 5 - A third embodiment of the invention.

Figure 6 - A fourth embodiment of the invention.

Figure 7 - A fifth embodiment of the invention.

Figure 8 - A sixth embodiment of the invention.

Figure 9 - A seventh embodiment of the invention.

### Detailed Description of the Invention

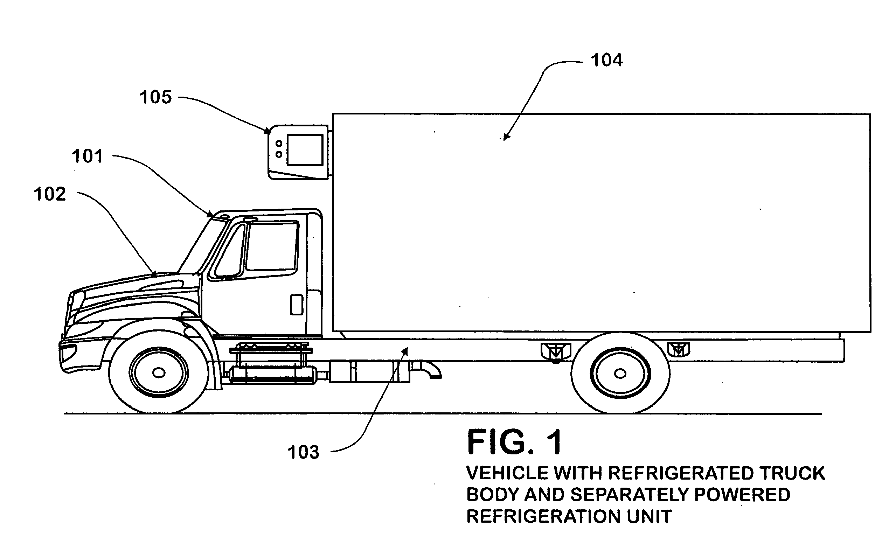

Figure 1 shows a vehicle 101 having a body 102, a chassis 103, and an insulated truck body 104. The insulated truck body 104 attached to the vehicle 101 shown in Figure 1 is provided with a conventional separately powered refrigeration unit 105.

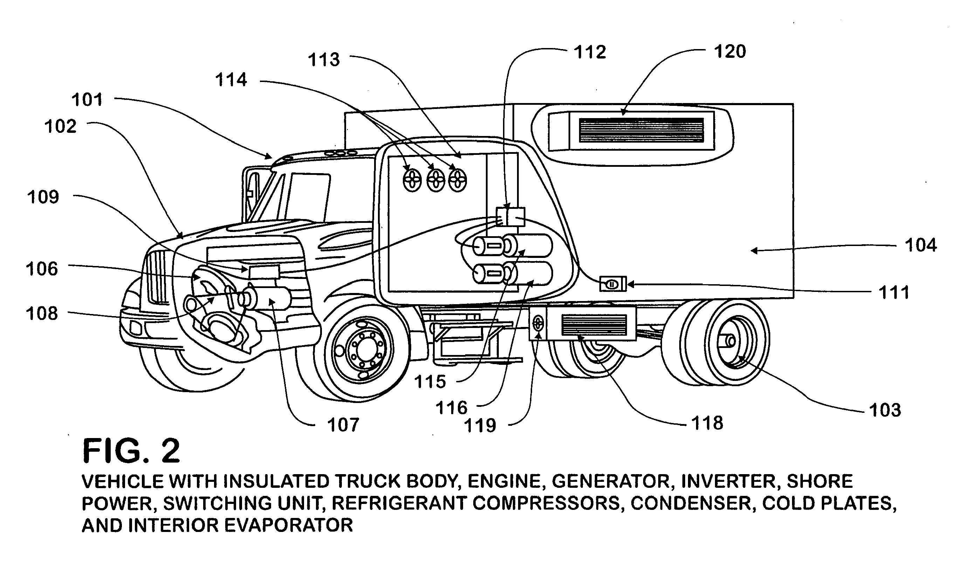

Figure 2 shows a vehicle 101 having a body 102, a chassis 103, and an insulated truck body 104. The vehicle 101 has an engine 106 for propulsion, to which engine 106 is attached a direct current (DC) electrical generator 107. The DC electrical generator 107 driven by the engine 106 by means of a belt drive 108, though it is within the scope of the invention that the DC electrical generator 107 may be driven by the engine 106 by other means, such as gears or hydraulic pumps and motors. The DC electricity produced by the DC electrical generator 107 is then conducted to a power converter / inverter 109, which power converter / inverter 109 serves to convert the DC electricity to alternating current (AC) electricity. As noted previously in this specification, the DC electrical generator 107 may produce DC electricity in the range of eight to sixteen volts DC, or it may produce DC power in a higher range, such as 40 to 350 volts DC. Further, the power converter / inverter 109 may convert the electricity produced by the DC electrical generator 107 to 115 volts AC operating at sixty hertz, to 230 volts AC split-phase, or to 208 volts AC three-phase. The AC electricity is then conducted from the power converter /inverter 109 to a switching unit 112. The vehicle 101 is also provided with a shore power hookup 111, which shore power hookup 111 serves to connect the vehicle 101 to municipal utility provided electrical power of 115 volts AC or 230 volts AC. The electricity provided through the shore power hookup 111 is then conducted to the switching unit 112. The switching unit 112, in turn, selectively conducts electricity provided by the power converter / inverter 109 or by the shore power hookup 111 to one or both of a first electrically powered refrigerant compressor 115 and a second electrically powered refrigerant compressor 116 if so provided, as will be further illustrated in subsequent figures. The first electrically powered refrigerant compressor 115 and second electrically powered refrigerant compressor 116 if so provided selectively provide refrigerant to evaporators within either or both of cold plates 113 or an interior evaporator unit 120. As is common with cold plates, the cold plates 113 in Figure 2 are provided with recirculating fans 114. As is also common with vehicles having refrigeration systems, the vehicle 101 in Figure 2 is provided with a condenser 118 having at least one condenser fan 119.

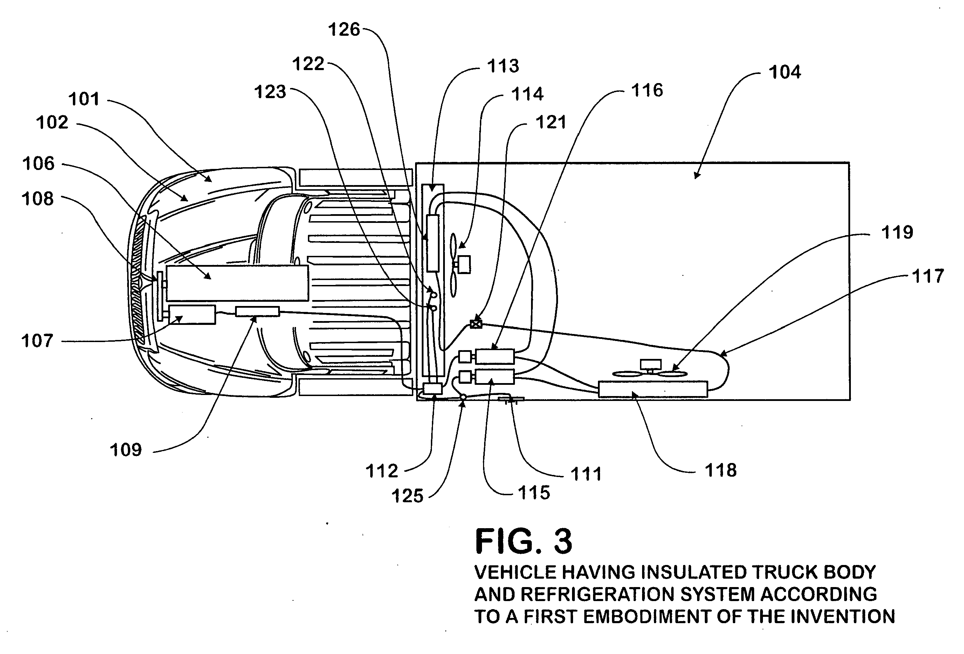

Figure 3 shows a vehicle 101 having a body 102, a chassis 103 (not visible in Figure 3), and an insulated truck body 104, similar to the vehicle 101 in Figure 2. The vehicle 101 again has an engine 106 for propulsion and a direct current (DC) electrical generator 107 driven by means of a belt drive 108. The DC electricity, whether eight to sixteen volts DC or 40 to 350 volts DC, produced by the DC electrical generator 107 is again converted by a power converter /inverter 109 to 115 volt alternating current (AC) electricity, to 230 volts AC split-phase, or to 208 volts AC three-phase. The AC electricity is then conducted from the power converter /inverter 109 to a switching unit 112. The vehicle 101 is again provided with a shore power hookup 111, which shore power hookup 111 serves to connect the vehicle 101 to municipal utility provided electrical power of 115 volts AC or 230 volts AC. The electricity provided through the shore power hookup 111 is conducted to a junction 125, and from the junction 125 both to the switching unit 112 and directly to the first electrically powered refrigerant compressor 115. The switching unit 112, in turn, selectively conducts electricity provided by the power converter / inverter 109 or by the shore power hookup 111 to the second electrically powered refrigerant compressor 116. When the vehicle 101 is plugged in, cooling is provided by the first electrically powered refrigerant compressor 115, and selectively by the second electrically powered refrigerant compressor 116, as determined by the switching unit 112. When electricity is being provided only by the power converter / inverter 109 then cooling is provided only by the second electrically powered refrigerant compressor 116. If the vehicle 101 is both plugged in and running, then cooling may be provided by the first electrically powered refrigerant compressor 115 by means of electricity provided by the shore power hookup 111, and cooling may at the same time be provided by the second electrically powered refrigerant compressor 116 by means of electricity provided by the power converter / inverter 109. Similar to the vehicle 101 shown in Figure 2, the vehicle shown in Figure 3 is provided with cold plates 113 located within the insulated truck body 104. The electrically powered refrigerant compressors 115 and 116 operate to pressurize a refrigerant loop 117, which refrigerant loop is provided with a condenser 118, an expansion valve 121, and an evaporator 126 within the cold plates 113. The electrically powered refrigerant compressors 115 and 116 may be of approximately the same size of about one horsepower capacity, or the second electrically powered refrigerant compressor 116 may be of a size of about one horsepower capacity and the first electrically powered refrigerant compressor 115 may be of a size of about two horsepower capacity. For the sake of illustration, the refrigerant loop 117 is shown as double lines from the electrically powered refrigerant compressors 115 and 116 to the condenser 118, single line from the condenser 118 to the expansion valve 121, single line from the expansion valve 121 to the evaporator 126, and double lines from the evaporator 126 to the electrically powered refrigerant compressors 115 and 116. However, it is within the scope of the invention that the lines be any combination of double and single between these devices, and that there may be single condenser 118 or double condensers, or that there may be a single expansion valve 121 or double expansion valves, or that there may be a single evaporator 126 within the cold plates 113 or double evaporators within the cold plates 113. A thermostat 122 and a frost sensor 123 are attached to the cold plates 113, and communicate with the switching unit 112. As is common with cold plates, the cold plates 113 in Figure 3 are again provided with recirculating fans 114. The condenser 118 is also provided with at least one condenser fan 119.

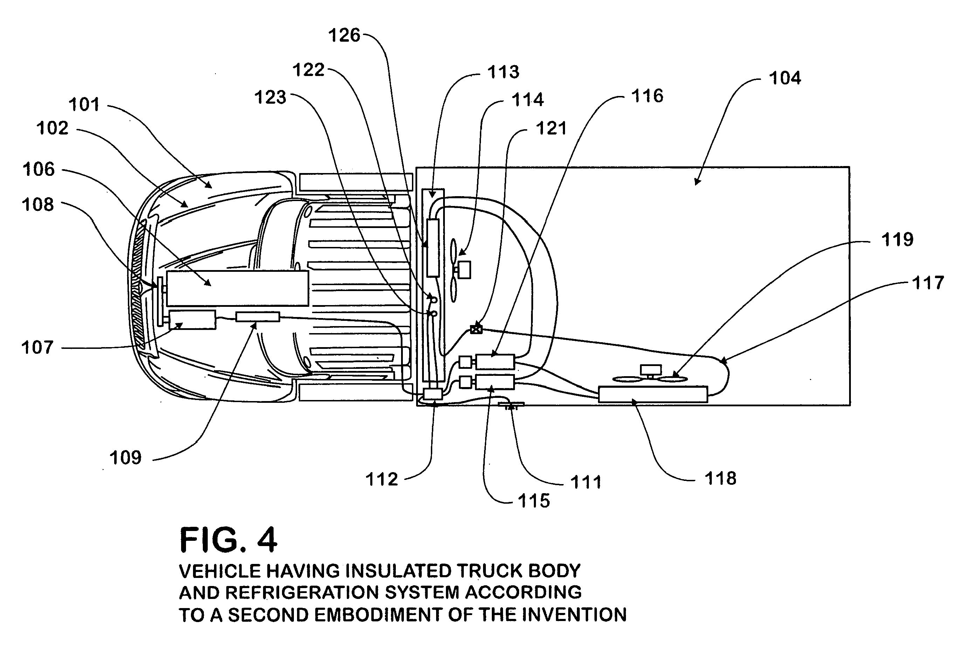

Figure 4 again shows a vehicle 101 having a body 102, a chassis 103 (not visible in Figure 4), an insulated truck body 104, an engine 106 for propulsion, and a direct current (DC) electrical generator 107 driven by means of a belt drive 108. The eight to sixteen volts DC or 40 to 350 volts DC produced by the DC electrical generator 107 is again converted by a power converter / inverter 109 to 115 volt alternating current (AC) electricity, to 230 volts AC split-phase, or to 208 volts AC three-phase, which is then conducted from the power converter /inverter 109 to a switching unit 112. The vehicle 101 is again provided with a shore power hookup 111, which shore power hookup 111 serves to connect the vehicle 101 to municipal utility provided electrical power of 115 volts AC or 230 volts AC. The electricity provided through the shore power hookup 111 is also conducted to the switching unit 112. The switching unit 112, in turn, selectively conducts electricity provided by the power converter / inverter 109 or by the shore power hookup 111 to the first electrically powered refrigerant compressor 115 and/or the second electrically powered refrigerant compressor 116. When the vehicle 101 is plugged in, cooling may be provided by the first electrically powered refrigerant compressor 115, the second electrically powered refrigerant compressor 116, or both, as determined by the switching unit 112. When electricity is being provided only by the power converter / inverter 109 then cooling may be provided by the first electrically powered refrigerant compressor 115 and the second electrically powered refrigerant compressor 116, or by the second electrically powered refrigerant compressor 116 only. The switching unit 112 may be capable of sensing the status of the vehicle engine 106 and electrical system, such that if the vehicle engine 106 and DC electrical generator 107 is generating sufficient extra power, both first electrically powered refrigerant compressor 115 and second electrically powered refrigerant compressor 116 are provided with power. If the vehicle engine is in a de-rate condition or at idle, or if the vehicle electrical system is consuming an excess of electricity, then the switching unit 112 may only provide power to the second electrically powered refrigerant compressor 116. If the vehicle 101 is both plugged in and running, then cooling may be provided by the first electrically powered refrigerant compressor 115 by means of electricity provided by the shore power hookup 111, and cooling may at the same time be provided by the second electrically powered refrigerant compressor 116 by means of electricity provided by the power converter / inverter 109. The vehicle shown in Figure 4 is again provided with cold plates 113 located within the insulated truck body 104. The refrigerant electrically powered refrigerant compressors 115 and 116 operate to pressurize the refrigerant loop 117, which refrigerant loop is provided with a condenser 118, an expansion valve 121, and an evaporator 126 within the cold plates 113. The electrically powered refrigerant compressors 115 and 116 may be of approximately the same size of about one horsepower capacity, or the second electrically powered refrigerant compressor 116 may be of a size of about one horsepower capacity and the first electrically powered refrigerant compressor 115 may be of a size of about two horsepower capacity. For the sake of illustration, the refrigerant loop 117 is shown as double lines from the electrically powered refrigerant compressors 115 and 116 to the condenser 118, single line from the condenser 118 to the expansion valve 121, single line from the expansion valve 121 to the evaporator 126, and double lines from the evaporator 126 to the electrically powered refrigerant compressors 115 and 116. However, it is within the scope of the invention that the lines be any combination of double and single between these devices, and that there may be single condenser 118 or double condensers, or that there may be a single expansion valve 121 or double expansion valves, or that there may be a single evaporator 126 within the cold plates 113 or double evaporators within the cold plates. A thermostat 122 and a frost sensor 123 are attached to the cold plates 113, and communicate with the switching unit 112. The cold plates 113 in Figure 4 are again provided with recirculating fans 114, and the condenser 118 is also provided with at least one condenser fan 119.

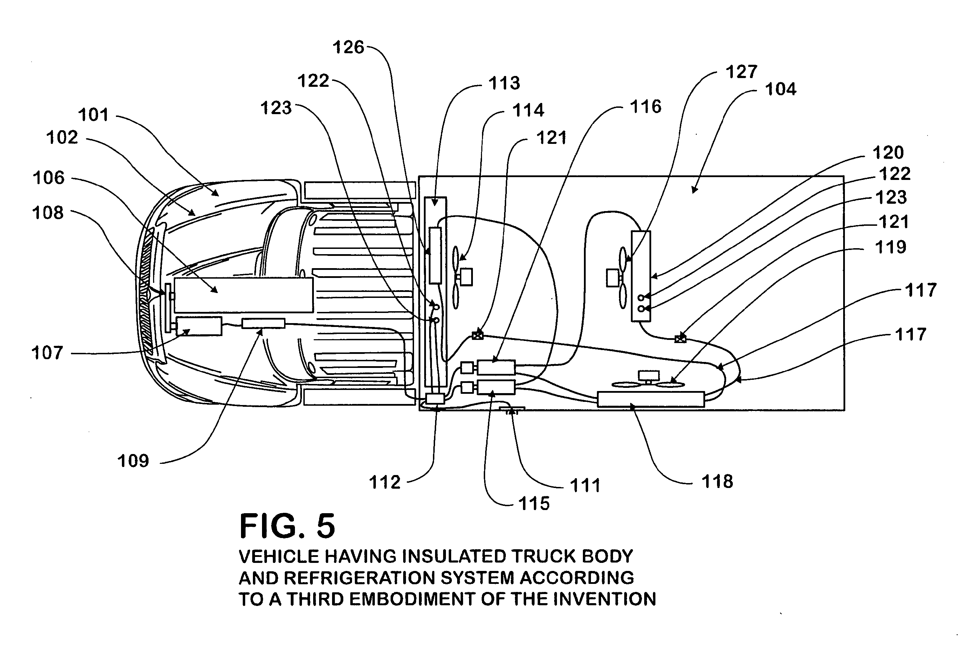

Figure 5 again shows a vehicle 101 having a body 102, a chassis 103 (not visible in Figure 5), an insulated truck body 104, an engine 106 for propulsion, and a direct current (DC) electrical generator 107 driven by means of a belt drive 108. The eight to sixteen volts DC or 40 to 350 volts DC produced by the DC electrical generator 107 is again converted by a power converter / inverter 109 to 115 volt alternating current (AC) electricity, to 230 volts AC split-phase, or to 208 volts AC three-phase, which is then conducted from the power converter /inverter 109 to a switching unit 112. The vehicle 101 is again provided with a shore power hookup 111, which shore power hookup 111 serves to connect the vehicle 101 to municipal utility provided electrical power of 115 volts AC or 230 volts AC. The electricity provided through the shore power hookup 111 is also conducted to the switching unit 112. The switching unit 112, in turn, selectively conducts electricity provided by the power converter / inverter 109 or by the shore power hookup 111 to the first electrically powered refrigerant compressor 115, the second electrically powered refrigerant compressor 116, or both. The vehicle shown in Figure 5 is not only provided with cold plates 113 located within the insulated truck body 104, but also an interior evaporator unit 120. The electrically powered refrigerant compressors 115 and 116 operate to pressurize two refrigerant loops 117, such that refrigerant provided by the first electrically powered refrigerant compressor 115 serves to supply the evaporator 126 within the cold plates 113, and the refrigerant provided by the second electrically powered refrigerant compressor 116 serves to supply the interior evaporator unit 120. Both refrigerant loops 117 are provided with condensers 118 (shown in a common housing) and expansion valves 121. When the vehicle 101 is plugged in, cooling may be provided by the first electrically powered refrigerant compressor 115 through the evaporator 126 within the cold plates 113, the second electrically powered refrigerant compressor 116 through the interior evaporator unit 120, or both, as determined by the switching unit 112. When electricity is being provided only by the power converter / inverter 109 then cooling may be provided by the first electrically powered refrigerant compressor 115 through the evaporator 126 within the cold plates 113 and the second electrically powered refrigerant compressor 116 through the interior evaporator unit 120, or by the second electrically powered refrigerant compressor 116 through the interior evaporator unit 120 only. The switching unit 112 may be capable of sensing the status of the vehicle engine 106 and electrical system, such that if the vehicle engine 106 and DC electrical generator 107 is generating sufficient extra power, both first electrically powered refrigerant compressor 115 and second electrically powered refrigerant compressor 116 are provided with power. If the vehicle engine is in a de-rate condition or at idle, or if the vehicle electrical system is consuming an excess of electricity, then the switching unit 112 may only provide power to the second electrically powered refrigerant compressor 116. If the vehicle 101 is both plugged in and running, then cooling may be provided by the first electrically powered refrigerant compressor 115 through the evaporator 126 within the cold plates 113 by means of electricity provided by the shore power hookup 111, and cooling may at the same time be provided by the second electrically powered refrigerant compressor 116 through the interior evaporator unit 120 by means of electricity provided by the power converter / inverter 109. The electrically powered refrigerant compressors 115 and 116 may be of approximately the same size of about one horsepower capacity, or the second electrically powered refrigerant compressor 116 may be of a size of about one horsepower capacity and the first electrically powered refrigerant compressor 115 may be of a size of about two horsepower capacity. A thermostat 122 and a frost sensor 123 are attached to the cold plates 113, and communicate with the switching unit 112. Another thermostat 122 and frost sensor 123 are attached to the interior evaporator unit 120, and also communicate with the switching unit 112 (for clarity of illustration, the wires connecting the thermostat 122 and the frost sensor 123 of the interior evaporator unit 120 to the switching unit 112 are not shown.) The cold plates 113 in Figure 5 are again provided with recirculating fans 114, the condenser 118 is provided with at least one condenser fan 119, and the interior evaporator unit 120 is provided with at least one interior evaporator fan 127.

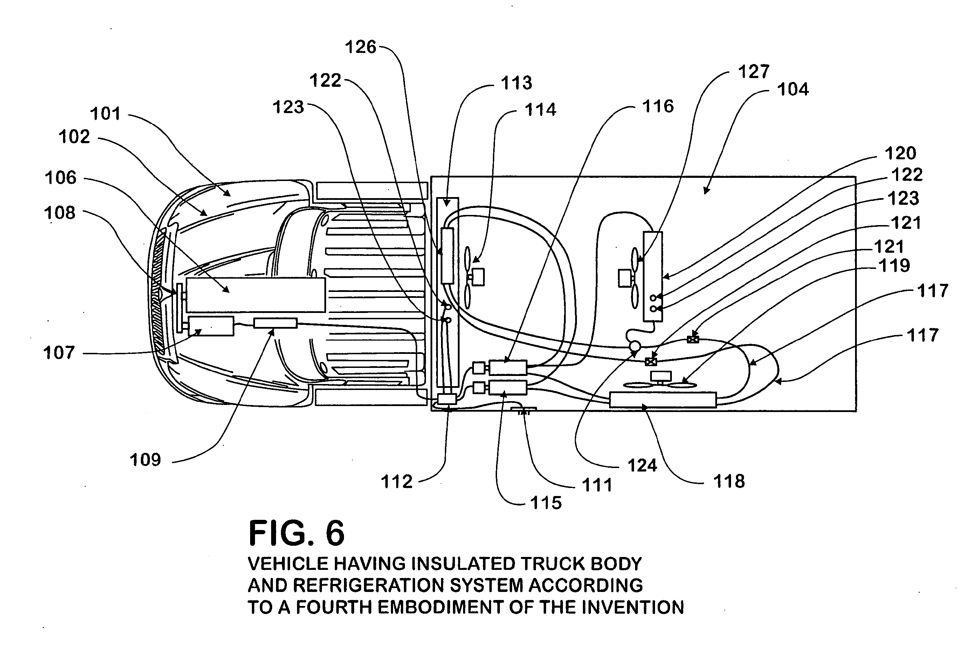

Figure 6 again shows a vehicle 101 having a body 102, a chassis 103 (not visible in Figure 6), an insulated truck body 104, an engine 106 for propulsion, and a direct current (DC) electrical generator 107 driven by means of a belt drive 108. The eight to sixteen volts DC or 40 to 350 volts DC produced by the DC electrical generator 107 is again converted by a power converter / inverter 109 to 115 volt alternating current (AC) electricity, to 230 volts AC split-phase, or to 208 volts AC three-phase, which is then conducted from the power converter /inverter 109 to a switching unit 112. The vehicle 101 is again provided with a shore power hookup 111, which shore power hookup 111 serves to connect the vehicle 101 to municipal utility provided electrical power of 115 volts AC or 230 volts AC. The electricity provided through the shore power hookup 111 is also conducted to the switching unit 112. The switching unit 112, in turn, selectively conducts electricity provided by the power converter / inverter 109 or by the shore power hookup 111 to the first electrically powered refrigerant compressor 115, the second electrically powered refrigerant compressor 116, or both. The vehicle shown in Figure 6 is provided with cold plates 113 located within the insulated truck body 104 and an interior evaporator unit 120. The electrically powered refrigerant compressors 115 and 116 operate to pressurize two refrigerant loops 117, similar to the two refrigerant loops shown in Figure 5, such that refrigerant provided by the first electrically powered refrigerant compressor 115 in Figure 6 serves to supply the evaporator 126 within the cold plates 113, and the refrigerant provided by the second electrically powered refrigerant compressor 116 in Figure 6 generally serves to supply the interior evaporator unit 120. Additionally the refrigerant loop 117 pressurized by the second electrically powered refrigerant compressor 116 is further provided with a refrigerant control valve 124, which serves to selectively direct the refrigerant provided by the second electrically powered refrigerant compressor 116 to either the interior evaporator unit 120 or the evaporator 126 within the cold plates 113. The refrigerant control valve 124 is controlled by the switching unit 112 (for clarity of illustration, the wires connecting the refrigerant control valve 124 to the switching unit 112 are not shown). Both refrigerant loops 117 are provided with condensers 118 (shown in a common housing) and expansion valves 121. When the vehicle 101 is plugged in, cooling may be provided by the first electrically powered refrigerant compressor 115 through the evaporator 126 within the cold plates 113, the second electrically powered refrigerant compressor 116 through the interior evaporator unit 120, or both, or by the first electrically powered refrigerant compressor 115 through the evaporator 126 within the cold plates 113 and by the second electrically powered refrigerant compressor 116 through the evaporator 126 within the cold plates 113 by means of operation of the refrigerant control valve 124, as determined by the switching unit 112. When electricity is being provided only by the power converter / inverter 109 then cooling may be provided by the first electrically powered refrigerant compressor 115 through the evaporator 126 within the cold plates 113 and the second electrically powered refrigerant compressor 116 through the interior evaporator unit 120, by the second electrically powered refrigerant compressor 116 through the interior evaporator unit 120 only, or by the second electrically powered refrigerant compressor 116 through the evaporator 126 within the cold plates 113 by means of operation of the refrigerant control valve 124, as determined by the switching unit 112. The switching unit 112 may be capable of sensing the status of the vehicle engine 106 and electrical system, such that if the vehicle engine 106 and DC electrical generator 107 is generating sufficient extra power, both first electrically powered refrigerant compressor 115 and second electrically powered refrigerant compressor 116 are provided with power. If the vehicle engine is in a de-rate condition or at idle, or if the vehicle electrical system is consuming an excess of electricity, then the switching unit 112 may only provide power to the second electrically powered refrigerant compressor 116. If the vehicle 101 is both plugged in and running, then cooling may be provided by the first electrically powered refrigerant compressor 115 through the evaporator 126 within the cold plates 113 by means of electricity provided by the shore power hookup 111, and cooling may at the same time be provided by the second electrically powered refrigerant compressor 116 through the interior evaporator unit 120, or through the evaporator 126 within the cold plates 113, by means of electricity provided by the power converter / inverter 109. The electrically powered refrigerant compressors 115 and 116 may be of approximately the same size of about one horsepower capacity, or the second electrically powered refrigerant compressor 116 may be of a size of about one horsepower capacity and the first electrically powered refrigerant compressor 115 may be of a size of about two horsepower capacity. A thermostat 122 and a frost sensor 123 are attached to the cold plates 113, and communicate with the switching unit 112. Another thermostat 122 and frost sensor 123 are attached to the interior evaporator unit 120, and also communicate with the switching unit 112 (for clarity of illustration, the wires connecting the thermostat 122 and the frost sensor 123 of the interior evaporator unit 120 to the switching unit 112 are not shown.) The cold plates 113 in Figure 6 are again provided with recirculating fans 114, the condenser 118 is provided with at least one condenser fan 119, and the interior evaporator unit 120 is provided with at least one interior evaporator fan 127.

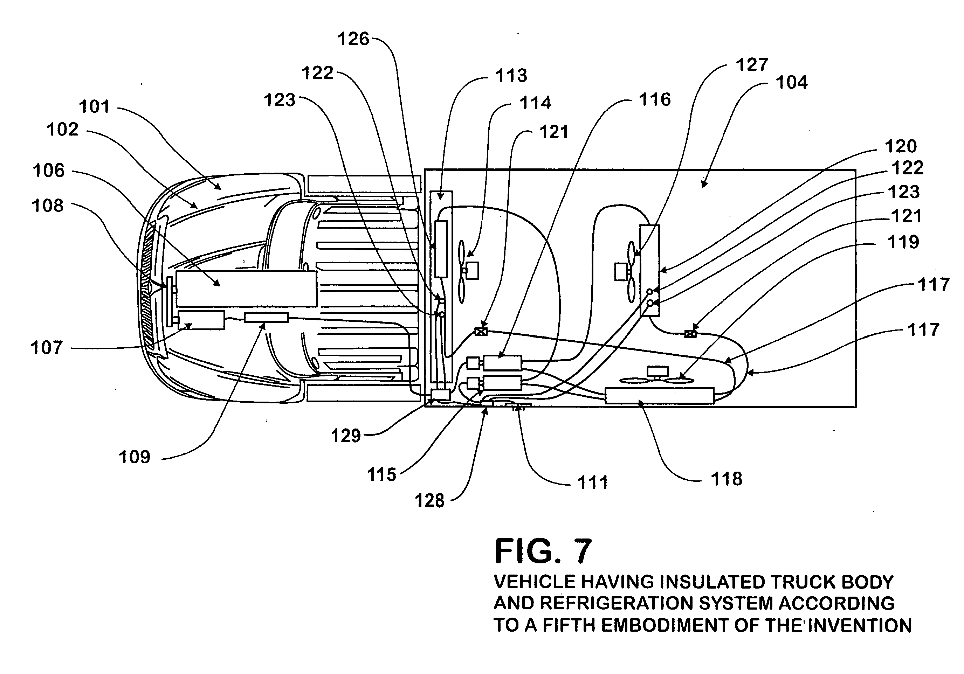

Figure 7 again shows a vehicle 101 having a body 102, a chassis 103 (not visible in Figure 7), an insulated truck body 104, an engine 106 for propulsion, and a direct current (DC) electrical generator 107 driven by means of a belt drive 108. The eight to sixteen volts DC or 40 to 350 volts DC produced by the DC electrical generator 107 is again converted by a power converter / inverter 109 to 115 volt alternating current (AC) electricity, to 230 volts AC split-phase, or to 208 volts AC three-phase, which is then conducted from the power converter /inverter 109 to a controller 129 of the second electrically powered refrigerant compressor 116. The vehicle 101 is again provided with a shore power hookup 111, which shore power hookup 111 serves to connect the vehicle 101 to municipal utility provided electrical power of 115 volts AC or 230 volts AC. The electricity provided through the shore power hookup 111 is conducted to a controller 128 of the first electrically powered refrigerant compressor 115. The controller 128 and the controller 129 are in signal communication with one another. The vehicle shown in Figure 7 is provided with cold plates 113 located within the insulated truck body 104, and an interior evaporator unit 120. The electrically powered refrigerant compressors 115 and 116 operate to pressurize two refrigerant loops 117, such that refrigerant provided by the first electrically powered refrigerant compressor 115 serves to supply the evaporator 126 within the cold plates 113, and the refrigerant provided by the second electrically powered refrigerant compressor 116 serves to supply the interior evaporator unit 120. Both refrigerant loops 117 are provided with condensers 118 (shown in a common housing) and expansion valves 121. When the vehicle 101 is plugged in, cooling is provided by the first electrically powered refrigerant compressor 115 through the evaporator 126 within the cold plates 113. When electricity is being provided only by the power converter / inverter 109 then cooling is provided by the second electrically powered refrigerant compressor 116 through the interior evaporator unit 120 only. If the vehicle 101 is both plugged in and running, then cooling may be provided by the first electrically powered refrigerant compressor 115 through the evaporator 126 within the cold plates 113 by means of electricity provided by the shore power hookup 111, and cooling may at the same time be provided by the second electrically powered refrigerant compressor 116 through the interior evaporator unit 120 by means of electricity provided by the power converter / inverter 109. Alternately, by means of communication between the controller 128 for the first electrically powered refrigerant compressor 115 and the controller 129 for the second compressor, the first electrically powered refrigerant compressor 115 may provide cooling through the evaporator 126 within the cold plates 113, while allowing the second electrically powered refrigerant compressor 116 to be at rest, thereby relieving the DC electrical generator 107 to provide electricity for other needs of the vehicle 101, such as charging the vehicle battery (not shown). A thermostat 122 and a frost sensor 123 are attached to the cold plates 113, and communicate with the controller 128 for the first electrically powered refrigerant compressor 115. Another thermostat 122 and frost sensor 123 are attached to the interior evaporator unit 120, and communicate with the controller 129 for the second electrically powered refrigerant compressor 116. If the vehicle 101 is both plugged in and running, the controller 128 and the controller 129 may determine whether the first electrically powered refrigerant compressor 115 is to provide cooling through the evaporator 126 within the cold plates 113 or the second electrically powered refrigerant compressor 116 is to provide cooling through the interior evaporator unit 120, based on the temperature or frost conditions of the cold plates 113 or the interior evaporator unit 120. The electrically powered refrigerant compressors 115 and 116 may be of approximately the same size of about one horsepower capacity, or the second electrically powered refrigerant compressor 116 may be of a size of about one horsepower capacity and the first electrically powered refrigerant compressor 115 may be of a size of about two horsepower capacity. The cold plates 113 in Figure 7 are again provided with recirculating fans 114, the condenser 118 is provided with at least one condenser fan 119, and the interior evaporator unit 120 is provided with at least one interior evaporator fan 127.

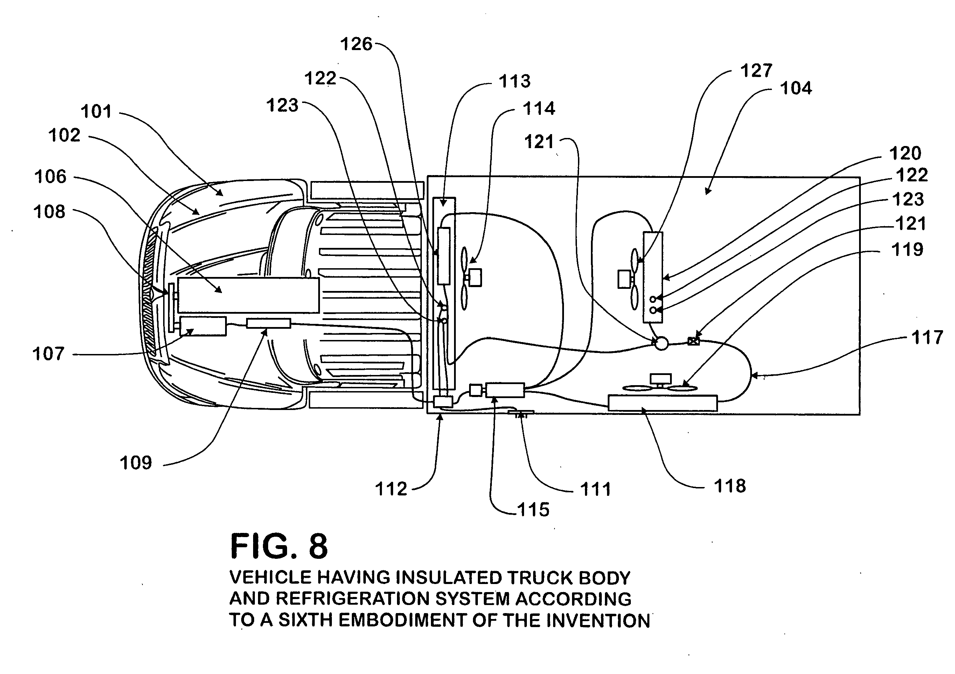

Figure 8 again shows a vehicle 101 having a body 102, a chassis 103 (not visible in Figure 5), an insulated truck body 104, an engine 106 for propulsion, and a direct current (DC) electrical generator 107 driven by means of a belt drive 108. The eight to sixteen volts DC or 40 to 350 volts DC produced by the DC electrical generator 107 is again converted by a power converter / inverter 109 to 115 volt alternating current (AC) electricity, to 230 volts AC split-phase, or to 208 volts AC three-phase, which is then conducted from the power converter /inverter 109 to a switching unit 112. The vehicle 101 is again provided with a shore power hookup 111, which shore power hookup 111 serves to connect the vehicle 101 to municipal utility provided electrical power of 115 volts AC or 230 volts AC. The electricity provided through the shore power hookup 111 is also conducted to the switching unit 112. The switching unit 112, in turn, selectively conducts electricity provided by the power converter / inverter 109 or by the shore power hookup 111 to the electrically powered refrigerant compressor 115. The vehicle shown in Figure 8 is provided with cold plates 113 located within the insulated truck body 104, and an interior evaporator unit 120. The electrically powered refrigerant compressor 115 operates to pressurize a refrigerant loop 117, such that refrigerant provided by the electrically powered refrigerant compressor 115 serves to supply the evaporator 126 within the cold plates 113 or the interior evaporator unit 120, depending upon the position of a refrigerant control valve 124. The refrigerant control valve 124 is controlled by the switching unit 112 (for clarity of illustration, the wires connecting the refrigerant control valve 124 to the switching unit 112 are not shown). The refrigerant loop 117 is provided with a condenser 118 and an expansion valve 121. When the vehicle 101 is plugged in, cooling may be provided by the electrically powered refrigerant compressor 115 through the evaporator 126 within the cold plates 113 or through the interior evaporator unit 120, depending upon the setting of the refrigerant control valve 124 as determined by the switching unit 112. When electricity is being provided only by the power converter / inverter 109 then cooling may be provided by the electrically powered refrigerant compressor 115 through the evaporator 126 within the cold plates 113 or through the interior evaporator unit 120, again depending upon the setting of the refrigerant control valve 124 as determined by the switching unit 112. The switching unit 112 may be capable of sensing the status of the vehicle engine 106 and electrical system, such that if the vehicle engine 106 and DC electrical generator 107 is generating sufficient extra power, the electrically powered refrigerant compressor 115 preferentially provides cooling through the evaporator 126 within the cold plates 113. If the vehicle engine is in a de-rate condition or at idle, or if the vehicle electrical system is consuming an excess of electricity, then the switching unit 112 may set the refrigerant control valve 124 to allow cooling only by the interior evaporator unit 120. Additionally, the electrically powered refrigerant compressor 115 may be switchable between one horsepower capacity and two horsepower capacity, such that the switching unit 112 may control the capacity of the electrically powered refrigerant compressor 115, depending on the conditions of the vehicle engine 106 and DC electrical generator 107. Additionally, a thermostat 122 and a frost sensor 123 is attached to the cold plates 113, and communicate with the switching unit 112. Another thermostat 122 and frost sensor 123 is attached to the interior evaporator unit 120, and also communicate with the switching unit 112 (for clarity of illustration, the wires connecting the thermostat 122 and the frost sensor 123 of the interior evaporator unit 120 to the switching unit 112 are not shown.) The setting of the electrically powered refrigerant compressor 115 capacity and of the refrigerant control valve 124 may depend upon the temperature and frost conditions of the cold plates 113 and of the interior evaporator unit 120. The cold plates 113 in Figure 8 are again provided with recirculating fans 114, the condenser 118 is provided with at least one condenser fan 119, and the interior evaporator unit 120 is provided with at least one interior evaporator fan 127.

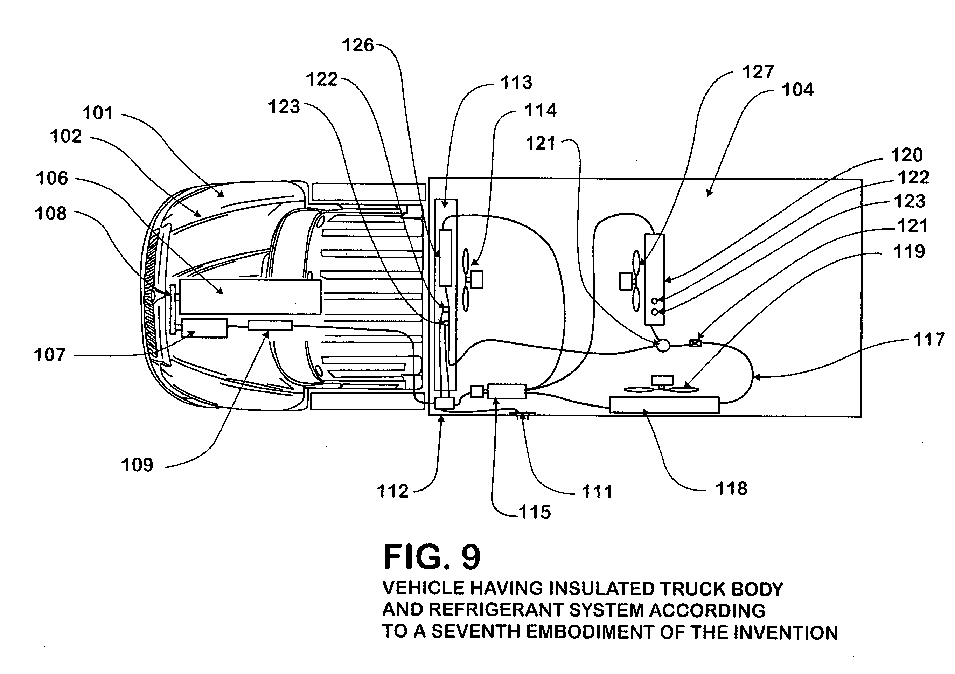

Figure 9 again shows a vehicle 101 having a body 102, a chassis 103 (not visible in Figure 5), an insulated truck body 104, an engine 106 for propulsion, and a direct current (DC) electrical generator 107 driven by means of a belt drive 108. The eight to sixteen volts DC or 40 to 350 volts DC produced by the DC electrical generator 107 is again converted by a power converter / inverter 109 to approximately 115 volts alternating current (AC) electricity, which is then conducted from the power converter / inverter 109 to a transformer 110. The transformer 110 converts the 115 volt AC electricity to 230 volt AC split-phase electricity or to 208 volts AC three-phase. The 230 volt AC split-phase or 208 volts AC three-phase electricity is then conducted to the switching unit 112. The vehicle 101 is again provided with a shore power hookup 111, which shore power hookup 111 serves to connect the vehicle 101 to municipal utility provided electrical power of 230 volts AC. The electricity provided through the shore power hookup 111 is also conducted to the switching unit 112. The switching unit 112, in turn, selectively conducts electricity provided by the power converter / inverter 109 or by the shore power hookup 111 to the electrically powered refrigerant compressor 115. The vehicle shown in Figure 9 is again provided with cold plates 113 with an evaporator 126, an interior evaporator unit 120, a refrigerant loop 117, a condenser 118, an expansion valve 121, and a refrigerant control valve 124. The refrigerant control valve 124 is again controlled by the switching unit 112 (for clarity of illustration, the wires connecting the refrigerant control valve 124 to the switching unit 112 are not shown). When the vehicle 101 is plugged in, cooling may be provided by the electrically powered refrigerant compressor 115 through the evaporator 126 within the cold plates 113 or through the interior evaporator unit 120, depending upon the setting of the refrigerant control valve 124 as determined by the switching unit 112. When electricity is being provided only by the power converter / inverter 109 through the transformer 110 then cooling may be provided by the electrically powered refrigerant compressor 115 through the evaporator 126 within the cold plates 113 or through the interior evaporator unit 120, again depending upon the setting of the refrigerant control valve 124 as determined by the switching unit 112. The switching unit 112 may again be capable of sensing the status of the vehicle engine 106 and electrical system, such that if the vehicle engine 106 and DC electrical generator 107 is generating sufficient extra power, the electrically powered refrigerant compressor 115 preferentially provides cooling through the evaporator 126 within the cold plates 113. If the vehicle engine is in a de-rate condition or at idle, or if the vehicle electrical system is consuming an excess of electricity, then the switching unit 112 may set the refrigerant control valve 124 to allow cooling only by the interior evaporator unit 120. As before, the electrically powered refrigerant compressor 115 may be switchable between one horsepower capacity and two horsepower capacity, such that the switching unit 112 may control the capacity of the electrically powered refrigerant compressor 115, depending on the conditions of the vehicle engine 106 and DC electrical generator 107. Additionally, a thermostat 122 and a frost sensor 123 is attached to the cold plates 113, and communicate with the switching unit 112. Another thermostat 122 and frost sensor 123 is attached to the interior evaporator unit 120, and also communicate with the switching unit 112 (for clarity of illustration, the wires connecting the thermostat 122 and the frost sensor 123 of the interior evaporator unit 120 to the switching unit 112 are not shown.) The setting of the electrically powered refrigerant compressor 115 capacity and of the refrigerant control valve 124 may depend upon the temperature and frost conditions of the cold plates 113 and of the interior evaporator unit 120. The cold plates 113 in Figure 9 are again provided with recirculating fans 114, the condenser 118 is provided with at least one condenser fan 119, and the interior evaporator unit 120 is provided with at least one interior evaporator fan 127.

While specific embodiments have been described in detail in the foregoing detailed description and illustrated in the accompanying drawings, those with ordinary skill in the art will appreciate that various permutations of the invention are possible without departing from the teachings disclosed herein. Accordingly, the particular arrangements disclosed are meant to be illustrative only and not limiting as to the scope of the invention, which is to be given the full breadth of the appended claims and any and all equivalents thereof. Other advantages to a vehicle equipped with a Cold Plate Refrigeration System Optimized for Energy Efficiency may also be inherent in the invention, without having been described above.

## Claims

1. A vehicle for operation on the ground, comprising:
a chassis;
a body attached to said chassis;
an engine attached to said chassis;
an insulated truck body attached to said chassis;
a direct current electrical generator driven by said engine, said direct current electrically generator generating direct current electricity;
a power converter / inverter electrically engaged to said direct current electrical generator, said power converter / inverter converting said direct current electricity to alternating current electricity;
a shore power hookup;
a switching unit electrically engaged to said power converter / inverter and to said shore power hookup;
a first electrically powered refrigerant compressor;
a second electrically powered refrigerant compressor;
at least one refrigerant loop, said at least one refrigerant loop having at least one condenser, at least one expansion valve, and at least one evaporator; and
a set of cold plates within said insulated truck body, said cold plates incorporating one of said at least one evaporators.

2. The vehicle for operation on the ground of claim 1, wherein:
said shore power hookup is further directly electrically engaged to said first electrically powered refrigerant compressor;
said switching unit being electrically engaged to said second electrically powered refrigerant compressor, and being operable to selectively provide electrical communication between said power converter / inverter and said second electrically powered refrigerant compressor or between said shore power hookup and said second electrically powered refrigerant compressor;
said first electrically powered refrigerant compressor and said second electrically powered refrigerant compressor in fluid communication with said at least one refrigerant loop and operable to pressurize said at least one refrigerant loop, and
said at least one refrigerant loop providing refrigerant to said evaporator incorporated into said cold plates.

3. The vehicle for operation on the ground of claim 2, wherein:
said switching unit being automatic, such that when said shore power hookup is engaged to a supply of electricity, said switching unit provides electrical communication between said shore power hookup and said second electrically powered refrigerant compressor, and does not provide electrical communication between said power converter / inverter and said second electrically powered refrigerant compressor, and such that when said shore power hookup is not engaged to a supply of electricity, said switching unit provides electrical communication between said power converter / inverter and said second electrically powered refrigerant compressor.

4. The vehicle for operation on the ground of claim 2, wherein:
said direct current electricity generated by said direct current electrical generator being between about eight volts direct current and about sixteen volts direct current.

5. The vehicle for operation on the ground of claim 2, wherein:
said direct current electricity generated by said direct current electrical generator being between about 40 volts direct current and about 350 volts direct current

6. The vehicle for operation on the ground of claim 2, wherein:
said alternating current electricity as converted by said power converter / inverter further being 115 volts alternating current electricity.

7. The vehicle for operation on the ground of claim 2, wherein:
said alternating current electricity as converted by said power converter / inverter further being 230 volts alternating current split-phase electricity.

8. The vehicle for operation on the ground of claim 2, wherein:
said alternating current electricity as converted by said power converter / inverter further being 208 volts alternating current three-phase electricity.

9. The vehicle for operation on the ground of claim 2, wherein:
said first electrically powered refrigerant compressor and said second electrically powered refrigerant compressor are both of about one horsepower in capacity.

10. The vehicle for operation on the ground of claim 2, wherein:
said first electrically powered refrigerant compressor is at least two horsepower in capacity and said second electrically powered refrigerant is about one horsepower in capacity.

11. The vehicle for operation on the ground of claim 1, wherein:
said switching unit being electrically engaged to said first electrically powered refrigerant compressor and to said second electrically powered refrigerant compressor, and being operable to selectively provide electrical communication between said power converter / inverter or said shore power hookup and said first electrically powered refrigerant compressor or said second electrically powered refrigerant compressor, or between said power converter / inverter or said shore power hookup and both of said first electrically powered refrigerant compressor and said second electrically powered refrigerant compressor;
said first electrically powered refrigerant compressor and said second electrically powered refrigerant compressor in fluid communication with said at least one refrigerant loop and operable to pressurize said at least one refrigerant loop, and
said at least one refrigerant loop providing refrigerant to said evaporator incorporated into said cold plates.

12. The vehicle for operation on the ground of claim 11, wherein:
said switching unit being automatic, such that when said shore power hookup is engaged to a supply of electricity, said switching unit provides electrical communication between said shore power hookup and said first electrically powered refrigerant compressor and said second electrically powered refrigerant compressor, and such that when said shore power hookup is not engaged to a supply of electricity, said switching unit provides electrical communication between said power converter /inverter and said second electrically powered refrigerant compressor.

13. The vehicle for operation on the ground of claim 11, wherein:
said switching unit being in signal communication with said engine, and being capable of sensing a de-rate or idling condition of said engine;
said switching unit being automatic, such that when said shore power hookup is engaged to a supply of electricity, said switching unit provides electrical communication between said shore power hookup and said first electrically powered refrigerant compressor and said second electrically powered refrigerant compressor, and such that when said shore power hookup is not engaged to a supply of electricity and said engine is not in a de-rate or idling condition, said switching unit provides electrical communication between said power converter / inverter and said first electrically powered refrigerant compressor and said second electrically powered refrigerant compressor, and such that when said shore power hookup is not engaged to a supply of electricity and said engine is in a de-rate or idling condition, said switching unit provides electrical communication between said power converter / inverter and said second electrically powered refrigerant compressor.

14. The vehicle for operation on the ground of claim 11, wherein:
said direct current electricity generated by said direct current electrical generator being between about eight volts direct current and about sixteen volts direct current.

15. The vehicle for operation on the ground of claim 11, wherein:
said direct current electricity generated by said direct current electrical generator being between about 40 volts direct current and about 350 volts direct current

16. The vehicle for operation on the ground of claim 11, wherein:
said alternating current electricity as converted by said power converter / inverter further being 115 volts alternating current electricity.

17. The vehicle for operation on the ground of claim 11, wherein:
said alternating current electricity as converted by said power converter / inverter further being 230 volts alternating current split-phase electricity.

18. The vehicle for operation on the ground of claim 11, wherein:
said alternating current electricity as converted by said power converter / inverter further being 208 volts alternating current three-phase electricity.

19. The vehicle for operation on the ground of claim 11, wherein:
said first electrically powered refrigerant compressor and said second electrically powered refrigerant compressor are both of about one horsepower in capacity.

20. The vehicle for operation on the ground of claim 11, wherein:
said first electrically powered refrigerant compressor is at least two horsepower in capacity and said second electrically powered refrigerant is about one horsepower in capacity.

21. The vehicle for operation on the ground of claim 1, wherein:
said switching unit being electrically engaged to said first electrically powered refrigerant compressor and to said second electrically powered refrigerant compressor, and being operable to selectively provide electrical communication between said power converter / inverter or said shore power hookup and said first electrically powered refrigerant compressor or said second electrically powered refrigerant compressor, or between said power converter / inverter or said shore power hookup and both of said first electrically powered refrigerant compressor and said second electrically powered refrigerant compressor;
said insulated truck body is further provided with an interior evaporator unit;
said at least one refrigerant loop further comprises a first refrigerant loop and a second refrigerant loop;
said first refrigerant loop being in fluid communication with said first electrically powered refrigerant compressor, said first electrically powered refrigerant compressor being operable to pressurize said first refrigerant loop, said first refrigerant loop providing refrigerant to said evaporator incorporated into said cold plates; and
said second refrigerant loop being in fluid communication with said second electrically powered refrigerant compressor, said second electrically powered refrigerant compressor being operable to pressurize said second refrigerant loop, said second refrigerant loop providing refrigerant to said interior evaporator unit.

22. The vehicle for operation on the ground of claim 21, wherein:
said switching unit being automatic, such that when said shore power hookup is engaged to a supply of electricity, said switching unit provides electrical communication between said shore power hookup and said first electrically powered refrigerant compressor and said second electrically powered refrigerant compressor, and such that when said shore power hookup is not engaged to a supply of electricity, said switching unit provides electrical communication between said power converter /inverter and said second electrically powered refrigerant compressor.

23. The vehicle for operation on the ground of claim 21, wherein:
said switching unit being automatic, such that when said shore power hookup is engaged to a supply of electricity, said switching unit provides electrical communication between said shore power hookup and said first electrically powered refrigerant compressor, and such that when said shore power hookup is not engaged to a supply of electricity, said switching unit provides electrical communication between said power converter / inverter and said second electrically powered refrigerant compressor.

24. The vehicle for operation on the ground of claim 21, wherein:
said switching unit being in signal communication with said engine, and being capable of sensing a de-rate or idling condition of said engine;
said switching unit being automatic, such that when said shore power hookup is engaged to a supply of electricity, said switching unit provides electrical communication between said shore power hookup and said first electrically powered refrigerant compressor and said second electrically powered refrigerant compressor, and such that when said shore power hookup is not engaged to a supply of electricity and said engine is not in a de-rate or idling condition, said switching unit provides electrical communication between said power converter / inverter and said first electrically powered refrigerant compressor and said second electrically powered refrigerant compressor, and such that when said shore power hookup is not engaged to a supply of electricity and said engine is in a de-rate or idling condition, said switching unit provides electrical communication between said power converter / inverter and said second electrically powered refrigerant compressor.

25. The vehicle for operation on the ground of claim 21, wherein:
said direct current electricity generated by said direct current electrical generator being between about eight volts direct current and about sixteen volts direct current.

26. The vehicle for operation on the ground of claim 21, wherein:
said direct current electricity generated by said direct current electrical generator being between about 40 volts direct current and about 350 volts direct current

27. The vehicle for operation on the ground of claim 21, wherein:
said alternating current electricity as converted by said power converter / inverter further being 115 volts alternating current electricity.

28. The vehicle for operation on the ground of claim 21, wherein:
said alternating current electricity as converted by said power converter / inverter further being 230 volts alternating current split-phase electricity.

29. The vehicle for operation on the ground of claim 21, wherein:
said alternating current electricity as converted by said power converter / inverter further being 208 volts alternating current three-phase electricity.

30. The vehicle for operation on the ground of claim 21, wherein:
said first electrically powered refrigerant compressor and said second electrically powered refrigerant compressor are both of about one horsepower in capacity.

31. The vehicle for operation on the ground of claim 21, wherein:
said first electrically powered refrigerant compressor is at least two horsepower in capacity and said second electrically powered refrigerant is about one horsepower in capacity.

32. The vehicle for operation on the ground of claim 21, wherein:
said cold plates being provided with a frost sensor in signal communication with said switching unit;
said interior evaporator unit being provided with a frost sensor in signal communication with said switching unit;
said switching unit being operable to interpret a frost condition upon said cold plates and in response provide electrical communication between said power converter /inverter or said shore power hookup and said second electrically powered refrigerant compressor only; and
said switching unit being operable to interpret a frost condition upon said interior evaporator unit and in response provide electrical communication between said power converter / inverter or said shore power hookup and said first electrically powered refrigerant compressor only.

33. The vehicle for operation on the ground of claim 21, wherein:
said second refrigerant loop being further provided with a refrigerant control valve and selectively providing refrigerant to said interior evaporator unit or to said evaporator incorporated into said cold plates, depending upon said refrigerant control valve, said refrigerant control valve being in signal communication with said switching unit and being controlled by said switching unit.

34. The vehicle for operation on the ground of claim 33, wherein:
said switching unit being automatic, such that when said shore power hookup is engaged to a supply of electricity, said switching unit provides electrical communication between said shore power hookup and said first electrically powered refrigerant compressor and said second electrically powered refrigerant compressor, and controls said refrigerant control valve to direct refrigerant provided by said second electrically powered refrigerant compressor to said evaporator incorporated into said cold plates, and such that when said shore power hookup is not engaged to a supply of electricity, said switching unit provides electrical communication between said power converter / inverter and said second electrically powered refrigerant compressor, and controls said refrigerant control valve to direct refrigerant provided by said second electrically powered refrigerant compressor to said interior evaporator unit.

35. The vehicle for operation on the ground of claim 33, wherein:
said switching unit being in signal communication with said engine, and being capable of sensing a de-rate or idling condition of said engine;
said switching unit being automatic, such that when said shore power hookup is engaged to a supply of electricity, said switching unit provides electrical communication between said shore power hookup and said first electrically powered refrigerant compressor and said second electrically powered refrigerant compressor, and controls said refrigerant control valve to direct refrigerant provided by said second electrically powered refrigerant compressor to said evaporator incorporated into said cold plates, and such that when said shore power hookup is not engaged to a supply of electricity and said engine is not in a de-rate or idling condition, said switching unit provides electrical communication between said power converter / inverter and said first electrically powered refrigerant compressor and said second electrically powered refrigerant compressor, and controls said refrigerant control valve to direct refrigerant provided by said second electrically powered refrigerant compressor to said evaporator incorporated into said cold plates, and such that when said shore power hookup is not engaged to a supply of electricity and said engine is in a de-rate or idling condition, said switching unit provides electrical communication between said power converter / inverter and said second electrically powered refrigerant compressor and controls said refrigerant control valve to direct refrigerant provided by said second electrically powered refrigerant compressor to said interior evaporator unit.

36. The vehicle for operation on the ground of claim 33, wherein:
said switching unit being in signal communication with said engine, and being capable of sensing a de-rate or idling condition of said engine;
said switching unit being automatic, such that when said shore power hookup is engaged to a supply of electricity, said switching unit provides electrical communication between said shore power hookup and said first electrically powered refrigerant compressor and said second electrically powered refrigerant compressor, and controls said refrigerant control valve to direct refrigerant provided by said second electrically powered refrigerant compressor to said evaporator incorporated into said cold plates, and such that when said shore power hookup is not engaged to a supply of electricity and said engine is not in a de-rate or idling condition, said switching unit provides electrical communication between said power converter / inverter and said first electrically powered refrigerant compressor and said second electrically powered refrigerant compressor, and controls said refrigerant control valve to direct refrigerant provided by said second electrically powered refrigerant compressor to said interior evaporator unit, and such that when said shore power hookup is not engaged to a supply of electricity and said engine is in a de-rate or idling condition, said switching unit provides electrical communication between said power converter / inverter and said second electrically powered refrigerant compressor and controls said refrigerant control valve to direct refrigerant provided by said second electrically powered refrigerant compressor to said interior evaporator unit.

37. The vehicle for operation on the ground of claim 33, wherein:
said direct current electricity generated by said direct current electrical generator being between about eight volts direct current and about sixteen volts direct current.

38. The vehicle for operation on the ground of claim 33, wherein:
said direct current electricity generated by said direct current electrical generator being between about 40 volts direct current and about 350 volts direct current

39. The vehicle for operation on the ground of claim 33, wherein:
said alternating current electricity as converted by said power converter / inverter further being 115 volts alternating current electricity.

40. The vehicle for operation on the ground of claim 33, wherein:
said alternating current electricity as converted by said power converter / inverter further being 230 volts alternating current split-phase electricity.

41. The vehicle for operation on the ground of claim 33, wherein:
said alternating current electricity as converted by said power converter / inverter further being 208 volts alternating current three-phase electricity.

42. The vehicle for operation on the ground of claim 33, wherein:
said first electrically powered refrigerant compressor and said second electrically powered refrigerant compressor are both of about one horsepower in capacity.

43. The vehicle for operation on the ground of claim 33, wherein:
said first electrically powered refrigerant compressor is at least two horsepower in capacity and said second electrically powered refrigerant is about one horsepower in capacity.

44. The vehicle for operation on the ground of claim 33, wherein:
said cold plates being provided with a frost sensor in signal communication with said switching unit;
said switching unit being operable to interpret a frost condition upon said cold plates and in response provide electrical communication between said power converter /inverter or said shore power hookup and said second electrically powered refrigerant compressor only, and control said refrigerant control valve to direct refrigerant provided by said second electrically powered refrigerant compressor to said interior evaporator unit.

45. A vehicle for operation on the ground, comprising:
a chassis;
a body attached to said chassis;
an engine attached to said chassis;
an insulated truck body attached to said chassis;
a direct current electrical generator driven by said engine, said direct current electrically generator generating direct current electricity;
a power converter / inverter electrically engaged to said direct current electrical generator, said power converter / inverter converting said direct current electricity to alternating current electricity;
a shore power hookup;
a switching unit electrically engaged to said power converter / inverter and to said shore power hookup;
an electrically powered refrigerant compressor electrically engaged to said switching unit;
a set of cold plates within said insulated truck body, said cold plates incorporating an evaporator;
an interior evaporator unit within said insulated truck body; and
a refrigerant loop, said refrigerant loop having a condenser, at least one expansion valve, and a refrigerant control valve, said refrigerant control valve in signal communication with said switching unit and controlled by said switching unit, and directing refrigerant to said evaporator incorporated into said cold plates or to said interior evaporator unit depending upon said refrigerant control valve.

46. The vehicle for operation on the ground of claim 45, wherein:
said switching unit being automatic, such that when said shore power hookup is engaged to a supply of electricity, said switching unit provides electrical communication between said shore power hookup and said electrically powered refrigerant compressor, and controls said refrigerant control valve to direct refrigerant provided by said electrically powered refrigerant compressor to said evaporator incorporated into said cold plates, and such that when said shore power hookup is not engaged to a supply of electricity, said switching unit provides electrical communication between said power converter / inverter and said electrically powered refrigerant compressor, and controls said refrigerant control valve to direct refrigerant provided by said electrically powered refrigerant compressor to said interior evaporator unit.

47. The vehicle for operation on the ground of claim 45, wherein:
said switching unit being in signal communication with said engine, and being capable of sensing a de-rate or idling condition of said engine;
said refrigerant control valve being further capable of directing refrigerant to both of said evaporator incorporated into said cold plates and to said interior evaporator unit;
said switching unit being automatic, such that when said shore power hookup is engaged to a supply of electricity, said switching unit provides electrical communication between said shore power hookup and said electrically powered refrigerant compressor, and controls said refrigerant control valve to direct refrigerant provided by said electrically powered refrigerant compressor to said evaporator incorporated into said cold plates, and such that when said shore power hookup is not engaged to a supply of electricity and said engine is not in a de-rate or idling condition, said switching unit provides electrical communication between said power converter / inverter and said electrically powered refrigerant compressor, and controls said refrigerant control valve to direct refrigerant provided by said electrically powered refrigerant compressor to said evaporator incorporated into said cold plates and to said interior evaporator unit, and such that when said shore power hookup is not engaged to a supply of electricity and said engine is in a de-rate or idling condition, said switching unit provides electrical communication between said power converter / inverter and said electrically powered refrigerant compressor and controls said refrigerant control valve to direct refrigerant provided by said electrically powered refrigerant compressor to said interior evaporator unit only.

48. The vehicle for operation on the ground of claim 45, wherein:
said switching unit being in signal communication with said engine, and being capable of sensing a de-rate or idling condition of said engine;
said refrigerant control valve being further capable of directing refrigerant to both of said evaporator incorporated into said cold plates and to said interior evaporator unit;
said switching unit being automatic, such that when said shore power hookup is engaged to a supply of electricity, said switching unit provides electrical communication between said shore power hookup and said electrically powered refrigerant compressor, and controls said refrigerant control valve to direct refrigerant provided by said electrically powered refrigerant compressor to said evaporator incorporated into said cold plates, and such that when said shore power hookup is not engaged to a supply of electricity and said engine is not in a de-rate or idling condition, said switching unit provides electrical communication between said power converter / inverter and said electrically powered refrigerant compressor, and controls said refrigerant control valve to direct refrigerant provided by said electrically powered refrigerant compressor to said evaporator incorporated into said cold plates and to said interior evaporator unit, and such that when said shore power hookup is not engaged to a supply of electricity and said engine is in a de-rate or idling condition, said switching unit provides electrical communication between said power converter / inverter and said electrically powered refrigerant compressor and controls said refrigerant control valve to direct refrigerant provided by said electrically powered refrigerant compressor to said interior evaporator unit only.

49. The vehicle for operation on the ground of claim 45, wherein:
said switching unit being in signal communication with said engine, and being capable of sensing a de-rate or idling condition of said engine;
said refrigerant control valve being further capable of directing refrigerant to both of said evaporator incorporated into said cold plates and to said interior evaporator unit;
said switching unit being automatic, such that when said shore power hookup is engaged to a supply of electricity, said switching unit provides electrical communication between said shore power hookup and said electrically powered refrigerant compressor, and controls said refrigerant control valve to direct refrigerant provided by said electrically powered refrigerant compressor to said evaporator incorporated into said cold plates and to said interior evaporator unit, and such that when said shore power hookup is not engaged to a supply of electricity and said engine is not in a de-rate or idling condition, said switching unit provides electrical communication between said power converter / inverter and said electrically powered refrigerant compressor, and controls said refrigerant control valve to direct refrigerant provided by said electrically powered refrigerant compressor to said evaporator incorporated into said cold plates and to said interior evaporator unit, and such that when said shore power hookup is not engaged to a supply of electricity and said engine is in a de-rate or idling condition, said switching unit provides electrical communication between said power converter / inverter and said electrically powered refrigerant compressor and controls said refrigerant control valve to direct refrigerant provided by said electrically powered refrigerant compressor to said interior evaporator unit only.

50. The vehicle for operation on the ground of claim 45, wherein:
said direct current electricity generated by said direct current electrical generator being between about eight volts direct current and about sixteen volts direct current.

51. The vehicle for operation on the ground of claim 45, wherein:
said direct current electricity generated by said direct current electrical generator being between about 40 volts direct current and about 350 volts direct current

52. The vehicle for operation on the ground of claim 45, wherein:
said alternating current electricity as converted by said power converter / inverter further being 115 volts alternating current electricity.

53. The vehicle for operation on the ground of claim 45, wherein:
said alternating current electricity as converted by said power converter / inverter further being 230 volts alternating current split-phase electricity.

54. The vehicle for operation on the ground of claim 45, wherein:
said alternating current electricity as converted by said power converter / inverter further being 208 volts alternating current three-phase electricity.

55. The vehicle for operation on the ground of claim 45, wherein:
said electrically powered refrigerant compressor is switchable between about one horsepower in capacity and about two horsepower in capacity.

56. The vehicle for operation on the ground of claim 45, wherein:
said cold plates being provided with a frost sensor in signal communication with said switching unit;
said switching unit being operable to interpret a frost condition upon said cold plates and in response provide electrical communication between said power converter /inverter or said shore power hookup and said electrically powered refrigerant compressor, and control said refrigerant control valve to direct refrigerant provided by said electrically powered refrigerant compressor to said interior evaporator unit.

57. A vehicle for operation on the ground, comprising:
a chassis;
a body attached to said chassis;
an engine attached to said chassis;
an insulated truck body attached to said chassis;
a direct current electrical generator driven by said engine, said direct current electrically generator generating direct current electricity;
a power converter / inverter electrically engaged to said direct current electrical generator, said power converter / inverter converting said direct current electricity to alternating current electricity of approximately 115 volts at approximately 60 hertz;
a transformer electrically engaged to said power converter / inverter;
a 230 volts compatible shore power hookup;
a switching unit electrically engaged to said transformer and to said shore power hookup;
an electrically powered refrigerant compressor electrically engaged to said switching unit;
a set of cold plates within said insulated truck body, said cold plates incorporating an evaporator;
an interior evaporator unit within said insulated truck body; and
a refrigerant loop, said refrigerant loop having a condenser, at least one expansion valve, and a refrigerant control valve, said refrigerant control valve in signal communication with said switching unit and controlled by said switching unit, and directing refrigerant to said evaporator incorporated into said cold plates or to said interior evaporator unit depending upon said refrigerant control valve.

58. The vehicle for operation on the ground of claim 57, wherein:
said switching unit being automatic, such that when said shore power hookup is engaged to a supply of electricity, said switching unit provides electrical communication between said shore power hookup and said electrically powered refrigerant compressor, and controls said refrigerant control valve to direct refrigerant provided by said electrically powered refrigerant compressor to said evaporator incorporated into said cold plates, and such that when said shore power hookup is not engaged to a supply of electricity, said switching unit provides electrical communication between said transformer and said electrically powered refrigerant compressor, and controls said refrigerant control valve to direct refrigerant provided by said electrically powered refrigerant compressor to said interior evaporator unit.

59. The vehicle for operation on the ground of claim 57, wherein:
said switching unit being in signal communication with said engine, and being capable of sensing a de-rate or idling condition of said engine;
said refrigerant control valve being further capable of directing refrigerant to both of said evaporator incorporated into said cold plates and to said interior evaporator unit;
said switching unit being automatic, such that when said shore power hookup is engaged to a supply of electricity, said switching unit provides electrical communication between said shore power hookup and said electrically powered refrigerant compressor, and controls said refrigerant control valve to direct refrigerant provided by said electrically powered refrigerant compressor to said evaporator incorporated into said cold plates, and such that when said shore power hookup is not engaged to a supply of electricity and said engine is not in a de-rate or idling condition, said switching unit provides electrical communication between said transformer and said electrically powered refrigerant compressor, and controls said refrigerant control valve to direct refrigerant provided by said electrically powered refrigerant compressor to said evaporator incorporated into said cold plates and to said interior evaporator unit, and such that when said shore power hookup is not engaged to a supply of electricity and said engine is in a de-rate or idling condition, said switching unit provides electrical communication between said transformer and said electrically powered refrigerant compressor and controls said refrigerant control valve to direct refrigerant provided by said electrically powered refrigerant compressor to said interior evaporator unit only.

60. The vehicle for operation on the ground of claim 57, wherein:
said switching unit being in signal communication with said engine, and being capable of sensing a de-rate or idling condition of said engine;
said refrigerant control valve being further capable of directing refrigerant to both of said evaporator incorporated into said cold plates and to said interior evaporator unit;
said switching unit being automatic, such that when said shore power hookup is engaged to a supply of electricity, said switching unit provides electrical communication between said shore power hookup and said electrically powered refrigerant compressor, and controls said refrigerant control valve to direct refrigerant provided by said electrically powered refrigerant compressor to said evaporator incorporated into said cold plates, and such that when said shore power hookup is not engaged to a supply of electricity and said engine is not in a de-rate or idling condition, said switching unit provides electrical communication between said transformer and said electrically powered refrigerant compressor, and controls said refrigerant control valve to direct refrigerant provided by said electrically powered refrigerant compressor to said evaporator incorporated into said cold plates and to said interior evaporator unit, and such that when said shore power hookup is not engaged to a supply of electricity and said engine is in a de-rate or idling condition, said switching unit provides electrical communication between said transformer and said electrically powered refrigerant compressor and controls said refrigerant control valve to direct refrigerant provided by said electrically powered refrigerant compressor to said interior evaporator unit only.

61. The vehicle for operation on the ground of claim 57, wherein:
said switching unit being in signal communication with said engine, and being capable of sensing a de-rate or idling condition of said engine;
said refrigerant control valve being further capable of directing refrigerant to both of said evaporator incorporated into said cold plates and to said interior evaporator unit;
said switching unit being automatic, such that when said shore power hookup is engaged to a supply of electricity, said switching unit provides electrical communication between said shore power hookup and said electrically powered refrigerant compressor, and controls said refrigerant control valve to direct refrigerant provided by said electrically powered refrigerant compressor to said evaporator incorporated into said cold plates and to said interior evaporator unit, and such that when said shore power hookup is not engaged to a supply of electricity and said engine is not in a de-rate or idling condition, said switching unit provides electrical communication between said transformer and said electrically powered refrigerant compressor, and controls said refrigerant control valve to direct refrigerant provided by said electrically powered refrigerant compressor to said evaporator incorporated into said cold plates and to said interior evaporator unit, and such that when said shore power hookup is not engaged to a supply of electricity and said engine is in a de-rate or idling condition, said switching unit provides electrical communication between said transformer and said electrically powered refrigerant compressor and controls said refrigerant control valve to direct refrigerant provided by said electrically powered refrigerant compressor to said interior evaporator unit only.

62. The vehicle for operation on the ground of claim 57, wherein:
said direct current electricity generated by said direct current electrical generator being between about eight volts direct current and about sixteen volts direct current.

63. The vehicle for operation on the ground of claim 57, wherein:
said direct current electricity generated by said direct current electrical generator being between about 40 volts direct current and about 350 volts direct current

64. The vehicle for operation on the ground of claim 57, wherein:
said transformer converting said 115 volts 60 hertz alternating current electricity from said power converter / inverter to 230 volts alternating current split-phase electricity.

65. The vehicle for operation on the ground of claim 57, wherein:
said transformer converting said 115 volts 60 hertz alternating current electricity from said power converter / inverter to 208 volts alternating current three-phase electricity.

66. The vehicle for operation on the ground of claim 57, wherein:
said electrically powered refrigerant compressor is about four horsepower in capacity.

67. The vehicle for operation on the ground of claim 57, wherein:
said transformer further converts said 115 volt 60 hertz electricity to 230 volts three-phase electricity.

68. The vehicle for operation on the ground of claim 57, wherein:
said transformer further converts said 115 volt 60 hertz electricity to 230 volts split-phase electricity.

69. The vehicle for operation on the ground of claim 57, wherein:
said cold plates being provided with a frost sensor in signal communication with said switching unit;
said switching unit being operable to interpret a frost condition upon said cold plates and in response provide electrical communication between said transformer or said shore power hookup and said electrically powered refrigerant compressor, and control said refrigerant control valve to direct refrigerant provided by said electrically powered refrigerant compressor to said interior evaporator unit.
